# EUROPEAN PATENT SPECIFICATION

(11) **EP 1 900 514 B1**
(45) Date of publication and mention of the grant of the patent: **14.08.2013**
(21) Application number: 06767269.1
(22) Date of filing: 23.06.2006
(51) Int. Cl.: B32B 27/32, H01M 2/16

(54) **POLYETHYLENE MULTILAYER MICROPOROUS MEMBRANE, BATTERY SEPARATOR USING SAME, AND BATTERY**
MEHRLAGIGE, MIKROPORÖSE POLYETHYLENMEMBRAN, DIESE VERWENDENDER BATTERIESEPARATOR UND BATTERIE
MEMBRANE MICROPOREUSE MULTICOUCHE EN POLYETHYLENE, SEPARATEUR DE BATTERIE COMPRENANT CETTE MEMBRANE, ET BATTERIE

(30) Priority: 24.06.2005 JP 2005185210
(43) Date of publication of application: 19.03.2008
(73) Proprietor: Toray Battery Separator Film Co., Ltd., Tochigi (JP)
(72) Inventor: KIKUCHI, Shintaro, Saitama-shi Saitama 3370017 (JP); TAKITA, Kotaro, Nasushiobara-shi Tochigi 3292735 (JP); YAMADA, Kazuhiro, Nasushiobara-shi Tochigi 3292732 (JP); NAKAMURA, Teiji, Tokyo 1670031 (JP); KONO, Koichi, Asaka-shi Saitama 3510025 (JP)
(74) Representative: Strehl Schübel-Hopf & Partner
(86) International application number: PCT/JP2006/312652
(87) International publication number: WO 2006/137540

(56) References cited:
- JP-A- 11 329 390
- JP-A- 61 273 941
- JP-A- 2001 138 455
- JP-A- 2002 069 221
- JP-A- 2002 321 323
- JP-A- 2002 515 363
- JP-A- 2004 149 637
- JP-A- 2004 161 899
- JP-A- 2006 179 485

## Description

### FIELD OF THE INVENTION

The present invention relates to a multi-layer, microporous polyethylene membrane having well-balanced air permeability, mechanical properties, dimensional stability, shutdown properties, meltdown properties, compression resistance and electrolytic solution absorption, and a battery separator and a battery using such membrane.

### BACKGROUND OF THE INVENTION

Microporous polyolefin membranes are widely used for various applications such as separators for lithium batteries, etc., electrolytic capacitor separators, various filters, moisture-permeable, waterproof clothes, various filters, etc. When microporous polyolefin membranes are used as battery separators, their performance greatly affect the properties, productivity and safety of batteries. Particularly separators for lithium ion batteries are required to have excellent mechanical properties and air permeability, performance (shutdown properties) of stopping a battery reaction by closing pores when abnormal heat generation occurs by the short-circuiting of external circuits, overcharge, etc., thereby preventing the heat generation, ignition, explosion, etc. of the batteries, and performance (dimensional stability) of keeping their shapes even at high temperatures to prevent the dangerous direct reaction of positive electrode materials with negative electrode materials.

Thus proposed is a battery separator comprising (a) a first layer constituted by at least one microporous sheet made of a polymer composition (for instance, polyolefin + filler such as metal oxide, etc.) and having a thickness of less than 0.025 cm, whose pores disappear at a temperature of about 80°C to about 150°C while substantially keeping its size, and (b) a second layer constituted by at least one microporous sheet made of a polymer composition and having a thickness of less than 0.025 cm and at least about 25% by volume of pores (average pore size: about 0.005 µm to about 5 µm), whose microporous structure and size are kept between room temperature and a temperature higher by at least about 10°C than the pore-disappearing temperature of the first layer (JP 62-10857 A). This battery separator has excellent dimensional stability and shutdown properties.

As a thin battery separator having excellent shutdown properties and strength, JP 11-329390 A proposes a battery separator comprising two high-strength, microporous polypropylene layers, and a filler-containing shielding polyethylene layer sandwiched by the polypropylene layers, the filler-containing shielding polyethylene layer being produced by a method of stretching a particle-containing film.

As a microporous polyolefin membrane having excellent safety functions and strength and useful for battery separators, JP 2002-321323 A proposes a microporous polyolefin membrane obtained by integrally laminating a microporous membrane A comprising polyethylene and polypropylene as indispensable components, and a microporous polyethylene membrane B. As preferred laminate structures of the above microporous membrane, JP 2002-321323 A lists membrane A/membrane B/membrane A and membrane B/membrane A/membrane B.

Recently, separators have been increasingly requested to have improved shutdown properties, mechanical strength and dimensional stability, as well as improved properties related to battery life such as cyclability, etc., and improved properties related to battery productivity such as electrolytic solution absorption, etc. Particularly electrodes in lithium ion batteries expand by the intrusion of lithium during charging, and shrink by the departure of lithium during discharging, and their expansion ratios tend to become larger during charging due to recent increase in battery capacity. Because separators are compressed by the expansion of electrodes, the separators are required to have air permeability undergoing little variation by compression (high compression resistance). If the microporous membrane had poor compression resistance, batteries having separators formed by such microporous membrane would highly likely have insufficient capacity (poor cyclability).

The applicant thus proposed a microporous membrane comprising a polyolefin and a non-polyolefin thermoplastic resin (for instance, polybutylene terephthalate), fibrils constituting the membrane being cleaved by fine particles (based on a non-polyolefin thermoplastic resin) having diameters of 1 to 10 µm and dispersed in the polyolefin, thereby forming pores of craze-like space, the above fine particles being held in the pores (JP 2004-149637 A). The applicant also proposed a microporous membrane comprising (a) polyethylene, and (b) a non-polyethylene thermoplastic resin such as polymethylpentene-1 having a melting point or glass transition temperature of 170 to 300°C, and finely dispersed without being fully dissolved when melt-blended together with polyethylene and its solvent, the air permeability increase when heat-compressed at 90°C under pressure of 5 MPa for 5 minutes being 500 seconds/100 cm³ or less (JP 2004-161899 A). However, the microporous membranes of JP 2004-149637 A and JP 2004-161899 A are insufficient in electrolytic solution absorption and compression resistance.

### OBJECTS OF THE INVENTION

Accordingly, an object of the present invention is to provide a multi-layer, microporous polyethylene membrane having an excellent balance of air permeability, mechanical properties, dimensional stability, shutdown properties, meltdown properties, compression resistance and electrolytic solution absorption, and useful for battery separators.

### DISCLOSURE OF THE INVENTION

The invention solving the above object is defined by the appended claims. As a result of intense research in view of the above object, the inventors have found that when a heat-resistant resin and a filler are added only to an inner layer of a multi-layer, microporous polyethylene membrane having at least three layers, the multi-layer, microporous polyethylene membrane is provided with excellent electrolytic solution absorption (expressed by absorbing speed and amount) in addition to excellent compression resistance. The present invention has been completed based on such finding.

Thus, the multi-layer, microporous polyethylene membrane of the present invention having at least three layers comprises (a) a first microporous layer made of a polyethylene resin and constituting at least both surface layers, and (b) at least one second microporous layer made of a polyethylene resin, a heat-resistant resin having a melting point or glass transition temperature of 150°C or higher and a filler, and sandwiched by both surface layers.

The polyethylene resin in the first and second microporous layers is a composition comprising ultra-high-molecular-weight polyethylene having a mass-average molecular weight of 5 x 10⁵ or more, and high-density polyethylene having Mw of 1 x 10⁴ or more and less than 5 x 10⁵. The heat-resistant resin is at least one selected from the group consisting of polyesters, polymethylpentene and polypropylene. The polyester is preferably polybutylene terephthalate.

The battery separator of the present invention is formed by the above multi-layer, microporous polyethylene membrane.

### DESCRIPTION OF THE PREFERRED EMBODIMENTS

[1] Multi-layer, microporous polyethylene membrane

The multi-layer, microporous polyethylene membrane having at least three layers comprises (a) a first microporous layer made of a polyethylene resin and constituting at least both surface layers, and (b) a at least one second microporous layer made of a polyethylene resin, a heat-resistant resin having a melting point or glass transition temperature (Tg) of 150°C or higher and a filler, and sandwiched by both surface layers.

(A) First microporous layer

(1) Polyethylene resin

The polyethylene resin forming the first microporous layer is a composition comprising ultra-high-molecular-weight polyethylene and another polyethylene than that. The ultra-high-molecular-weight polyethylene has a mass-average molecular weight (Mw) of 5 x 10⁵ or more. The ultra-high-molecular-weight polyethylene is not restricted to an ethylene homopolymer, but may be an ethylene·α-olefin copolymer containing smalls amount of other α-olefins. The other α-olefins than ethylene are preferably propylene, butene-1, pentene-1, hexene-1, 4-methylpentene-1, octene, vinyl acetate, methyl methacrylate, and styrene. The Mw of the ultra-high-molecular-weight polyethylene is preferably 1 x 10⁶ to 15 x 10⁶, more preferably 1 x 10⁶ to 5 x 10⁶. The ultra-high-molecular-weight polyethylene is not restricted to a single substance, but may be a mixture of two or more types of ultra-high-molecular-weight polyethylene. The mixture may be, for instance, a mixture of two or more types of ultra-high-molecular-weight polyethylene having different Mws.

The other polyethylene than ultra-high-molecular-weight polyethylene has Mw of 1 x 10⁴ or more and less than 5 x 10⁵, and is high-density polyethylene. The polyethylene having Mw of 1 x 10⁴ or more and less than 5 x 10⁵ is not restricted to an ethylene homopolymer, but may be a copolymer containing smalls amount of other α-olefins such as propylene, butene-1, hexene-1, etc. Such copolymer is preferably produced using a single-site catalyst. The other polyethylene than the ultra-high-molecular-weight polyethylene is not restricted to a single substance, but may be a mixture of two or more types of other polyethylene than the ultra-high-molecular-weight polyethylene. The mixture may be, for instance, a mixture of two or more types of high-density polyethylene having different Mws, a mixture of similar types of medium-density polyethylene, a mixture of similar low-density polyethylene, etc.

The content of the ultra-high-molecular-weight polyethylene in the polyethylene composition is preferably 1% by mass or more, more preferably 10 to 80% by mass, based on 100 parts by mass of the entire polyethylene composition.

In any cases, the Mw of the polyethylene resin is usually 1 x 10⁴ or more, preferably 5 x 10⁴ to 15 x 10⁶, more preferably 5 x 10⁴ to 5 x 10⁶, though not particularly restricted. When the Mw of the polyethylene resin is 15 x 10⁶ or less, it is easily melt-extruded.

The polyethylene resin may contain other polyolefins than polyethylene, which have melting points of lower than 150°C, if necessary. The other polyolefins than polyethylene having melting points of lower than 150°C may be at least one selected from the group consisting of polybutene-1, polypentene-1, polyhexene-1, polyoctene-1 and ethylene·α-olefin copolymers each having Mw of 1 x 10⁴ to 4 x 10⁶, and polyethylene wax having Mw of 1 x 10³ to 1 x 10⁴. Polybutene-1, polypentene-1, polyhexene-1 and polyoctene-1 are not restricted to homopolymers but may be copolymers with other α-olefins. The content of the other polyolefin than polyethylene having a melting point of lower than 150°C is preferably 20% by mass or less, more preferably 10% by mass or less, per 100% by mass of the entire polyethylene resin.

When the polyethylene resin is any one of the above polyethylene composition, the ultra-high-molecular-weight polyethylene or the other polyethylene than the ultra-high-molecular-weight polyethylene, the Mw/Mn of the polyethylene resin is preferably 5 to 300, more preferably 10 to 100, though not restrictive. When the Mw/Mn is less than 5, there are too much high-molecular-weight components, resulting in difficulty in melt extrusion. When the Mw/Mn is more than 300, there are too much low-molecular-weight components, providing the microporous membrane with reduced strength. The Mw/Mn is a measure of a molecular weight distribution, the larger this value, the wider the molecular weight distribution. Though not restrictive, the Mw/Mn of the polyethylene, a homopolymer or an ethylene α-olefin copolymer, may be properly controlled by multi-stage polymerization. The multi-stage polymerization method is preferably a two-stage polymerization method comprising forming a high-molecular-weight polymer component in the first stage and forming a low-molecular-weight polymer component in the second stage. In the case of the polyethylene composition, the larger the Mw/Mn, the larger difference in Mw between the ultra-high-molecular-weight polyethylene and the other polyethylene, and vice versa. The Mw/Mn of the polyethylene composition may be properly controlled by the molecular weight and percentage of each component.

(2) Compositions of both surface layers

The first microporous layers on both surfaces may have the same or different compositions, though the same composition is preferable.

(3) Number of layers

The first microporous layers need only be on both surfaces, three or more first layers may be included, if necessary. For instance, another first microporous layer having a different composition from those of the surface layers may exist together with the second microporous layer between the surface layers.

(4) Function of first microporous layer

With both surface layers of the multi-layer, microporous polyethylene membrane formed by the above first microporous layer, the multi-layer, microporous polyethylene membrane has excellent mechanical properties, air permeability, dimensional stability, shutdown properties and meltdown properties.

(B) Second microporous layer

(1) Polyethylene resin

The polyethylene resin forming the second microporous layer may be the same as above. The polyethylene resin forming the second microporous layer may have the same or different composition as those of the first microporous layer on both surfaces, properly selectable depending on the desired properties.

(2) Heat resistance resin

The heat-resistant resin has a melting point or glass transition temperature (Tg) of 150°C or higher. Preferable as the heat-resistant resin are a crystalline resin (including partially crystalline resin) having a melting point of 150°C or higher, and/or an amorphous resin having Tg of 150°C or higher. The melting point and Tg can be measured according to JIS K7121.

The addition of the heat-resistant resin to the polyethylene resin improves the compression resistance and electrolytic solution absorption of the multi-layer, microporous polyethylene membrane when used as a battery separator. It is preferable that the heat-resistant resin is preferably dispersed in the form of spherical or oval fine particles in the polyethylene resin, and that polyethylene resin fibrils are cleaved to provide pores (craze-like space) each having a fine heat-resistant resin particle as a core, in the second microporous layer. The diameters of fine spherical particles and the longer diameters of fine oval particles are preferably 0.1 to 15 µm, more preferably 0.5 to 10 µm. The formation of the above pores (craze-like space) in the second microporous layer further improves compression resistance and electrolytic solution absorption.

When a crystalline resin having a melting point of lower than 150°C or an amorphous resin having Tg of lower than 150°C is used, the resin is excessively dispersed in the polyethylene resin, failing to form fine particles of proper size. As a result, too small cleavage space with a fine resin particle as a core is formed, resulting in insufficient compression resistance and electrolytic solution absorption. The upper limit of the melting point or Tg of the heat-resistant resin is preferably 350°C from the aspect of ease of blending with the polyethylene resin, though not particularly restricted. The melting point or Tg of the heat-resistant resin is more preferably 160 to 260°C.

The Mw of the heat-resistant resin is preferably 1 x 10³ to 1 x 10⁶, more preferably 1 x 10⁴ to 8 x 10⁵, though variable depending on the type of the resin. The heat-resistant resin having Mw of less than 1 x 10³ is excessively dispersed in the polyethylene resin, failing to form fine particles of proper size. The heat-resistant resin having Mw of more than 1 x 10⁶ cannot easily be blended with the polyethylene resin.

Specific examples of the heat-resistant resin include polyesters, polymethylpentene [PMP or TPX (transparent polymer X)], polypropylene. The heat-resistant resin is not a single resin component, but may be composed of pluralities of resin components. The polyesters, polymethylpentene, polypropylene, fluororesins, polyamides, polyarylene sulfides will be explained in detail below.

(a) Polyesters

The polyesters include polybutylene terephthalate (PBT, melting point: about 160 to 230°C), polyethylene terephthalate (PET, melting point: about 250 to 270°C), polyethylene naphthalate (PEN, melting point: 272°C), polybutylene naphthalate (PBN, melting point: 245°C), etc., and PBT is preferable.

PBT is essentially a saturated polyester consisting of 1,4-butanediol and terephthalic acid. Other diols than 1,4-butanediol, or other carboxylic acids than terephthalic acid may be contained as comonomers in ranges not deteriorating properties such as heat resistance, compression resistance, dimensional stability, etc. Such diols include, for instance, ethylene glycol, diethylene glycol, neopentyl glycol, 1,4-cyclohexane methanol, etc. Dicarboxylic acids include, for instance, isophthalic acid, sebacic acid, adipic acid, azelaic acid, succinic acid, etc. A specific example of PBT is, for instance, homo-PBT commercially available from Toray Industries, Inc. under the tradename of "Toraycon." PBT is not restricted to a single resin component, but may be a composition of pluralities of PBT resin components. Particularly, PBT preferably has Mw of 2 x 10⁴ to 3 x 10⁵.

(b) Polymethylpentene

PMP is essentially at least one selected from the group consisting of polyolefins of 4-methyl-1-pentene, 2-methyl-1-pentene, 2-methyl-2-pentene, 3-methyl-1-pentene and 3-methyl-2-pentene, and a homopolymer of 4-methyl-1-pentene is preferable. PMP may be a copolymer containing small amounts of other α-olefins than methylpentene in ranges not deteriorating properties such as heat resistance, compression resistance, dimensional stability, etc. The other α-olefins than methylpentene are preferably ethylene, propylene, butene-1, hexene-1, pentene-1, octene-1, vinyl acetate, methyl methacrylate, styrene, etc. The melting point of PMP is usually 230 to 245°C. Particularly, PMP preferably has Mw of 3 x 10⁵ to 7 x 10⁵.

(c) Polypropylene

Polypropylene is not restricted to a homopolymer, but may be a copolymer containing other olefins or diolefins in ranges not deteriorating properties such as heat resistance, compression resistance, dimensional stability, etc. The other olefins are preferably ethylene or α-olefins. The α-olefins preferably have 4 to 8 carbon atoms. The α-olefins having 4 to 8 carbon atoms are preferably, for instance, 1-butene, 1-hexene, 4-methyl-1-pentene, etc. The diolefins preferably have 4 to 14 carbon atoms. The diolefins having 4 to 14 carbon atoms include, for instance, butadiene, 1,5-hexadiene, 1,7-octadiene, 1,9-decadiene, etc. The content of the other olefin or diolefin is preferably less than 10% by mole per 100% by mole of the propylene copolymer. Polypropylene may be a single resin or a composition of two or more PP components.

The Mw of polypropylene is particularly preferably 1 x 10⁵ to 8 x 10⁵. The molecular weight distribution (Mw/Mn) of polypropylene is preferably 1.01 to 100, more preferably 1.1 to 50. The melting point of polypropylene is preferably 155 to 175°C. Polypropylene having Mw, molecular weight distribution and melting point described above is dispersed as fine particles having the above-described shape and particle size in the polyethylene resin. Accordingly, fibrils constituting the microporous membrane are cleaved to form pores of craze-like space each having a fine polypropylene particle as a core.

(d) Content

The content of the heat-resistant resin is preferably 3 to 30% by mass, more preferably 5 to 25% by mass, per the total amount (100% by mass) of the polyethylene resin and the heat-resistant resin. When this content is less than 3% by mass, the membrane has insufficient compression resistance and electrolytic solution absorption. When this content exceeds 30% by mass, the membrane has low pin puncture strength and compression deformability.

(3) Fillers

The fillers include inorganic fillers i.e. silica and/or calcium carbonate.

The shape of filler particles is not particularly restricted. The fillers may be, for instance, in a spherical or crushed shape, though spherical fillers are preferable. The volume-average particle size of the filler is preferably 0.1 to 15 µm, more preferably 0.5 to 10 µm. The volume-average particle size can be measured according to JIS Z8825-1 using a laser-scattering particle size distribution meter. The filler may be surface-treated. Surface-treating agents for the filler include, for instance, various silane coupling agents, aliphatic acids (for instance, stearic acid, etc.) or their derivatives, etc.

With the heat-resistant resin and the filler contained, the membrane is provided with improved electrolytic solution absorption. This is presumably due to the fact that the filler acts as a core for pores (craze-like space) formed by the cleavage of polyethylene resin fibrils, contributing to increase in the pore volume.

The filler content is preferably 0.1 to 5% by mass, more preferably 0.5 to 3% by mass, per the total amount (100% by mass) of the polyethylene resin and heat-resistant resin. When this content is less than 0.1% by mass, the membrane is provided with insufficient electrolytic solution absorption. When this content exceeds 5% by mass, the membrane is provided with decreased pin puncture strength and compression deformability, resulting in increase in the detachment of fillers during slitting. When a lot of powder is generated by the detachment of fillers, the multi-layer, microporous membrane products are likely to have defects such as pinholes, dots, etc.

(4) Number of layers

The second microporous layer is usually one layer, but it may be a multi-layer, if necessary. For instance, pluralities of second microporous layers having different compositions may be used.

(5) Functions of second microporous layer

At least one second microporous layer sandwiched by both surface layers provides the multi-layer, microporous polyethylene membrane with good compression resistance and electrolytic solution absorption.

(C) Examples of layer structure and proportions of first and second microporous layers

Though not restrictive, the multi-layer, microporous polyethylene membrane usually has a three-layer structure comprising the first microporous layer, the second microporous layer and the first microporous layer. A ratio of the first microporous layer to the second microporous layer is not particularly restricted, but may be properly set depending on the applications of the multi-layer, microporous membrane. The mass ratio of (the polyethylene resin in the first microporous layer) to (the total of the polyethylene resin, the heat-resistant resin and the filler in the second microporous layer) is preferably 70/30 to 10/90, more preferably 60/40 to 20/80.

[2] Production method of multi-layer, microporous polyethylene membrane

(A) First production method

The first method for producing a multi-layer, microporous polyethylene membrane comprises the steps of (1) (a) melt-blending the polyethylene resin and the membrane-forming solvent to prepare a first melt blend (first polyethylene solution), (b) melt-blending the polyethylene resin, the heat-resistant resin, the filler and the membrane-forming solvent to prepare a second melt blend (second polyethylene solution), (2) extruding the first and second polyethylene solutions in a multi-layer through a die, and cooling the extrudate to form a multi-layer, gel-like sheet, (3) stretching the multi-layer, gel-like sheet, (4) removing the membrane-forming solvent, and (5) drying the membrane. After the steps (1) to (5), a heat treatment step (6), a re-stretching step (7), a cross-linking step (8) with ionizing radiations, a hydrophilizing step (9), etc. may be conducted, if necessary.

(1) Preparation of polyethylene solution

(a) Preparation of first polyethylene solution

The polyethylene resin is mixed with a proper membrane-forming solvent, and then melt-blended to prepare a first polyethylene solution. The first polyethylene solution may contain various additives such as antioxidants, ultraviolet absorbents, antiblocking agents, pigments, dyes, inorganic fillers, etc., if necessary, in ranges not deteriorating the effects of the present invention. Fine silicate powder, for instance, may be added as a pore-forming agent.

The membrane-forming solvent may be liquid or solid. The liquid solvents may be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel-like sheet having a stable liquid solvent content, non-volatile liquid solvents such as liquid paraffin are preferable. The solid solvent preferably has melting point of 80°C or lower. Such a solid solvent is paraffin wax, ceryl alcohol, stearyl alcohol, dicyclohexyl phthalate, etc. The liquid solvent and the solid solvent may be used in combination.

The viscosity of the liquid solvent is preferably 30 to 500 cSt, more preferably 30 to 200 cSt, at a temperature of 25°C. When this viscosity is less than 30 cSt, the resin solution is unevenly extruded through a die lip, resulting in difficulty in blending. The viscosity of more than 500 cSt makes the removal of the liquid solvent difficult.

Though not particularly restricted, the uniform melt-blending of the first polyethylene solution is preferably conducted in a double-screw extruder. Melt-blending in a double-screw extruder is suitable for preparing a high-concentration polyolefin solution. The melt-blending temperature is preferably from the melting point of the polyethylene composition in the polyethylene resin +10°C to the melting point +120°C. Specifically, the melt-blending temperature is preferably 140 to 250°C, more preferably 170 to 240°C. The membrane-forming solvent may be added before blending, or charged into the double-screw extruder during blending, though the latter is preferable. In the melt-blending, an antioxidant is preferably added to prevent the oxidization of the polyethylene resin.

The ratio (L/D) of a screw length L to a screw diameter D in the double-screw extruder is preferably 20 to 100, more preferably 35 to 70. When L/D is less than 20, the melt-blending is insufficient. When L/D is more than 100, the residing time of the resin solution is too long. The shape of the screw is not particularly restricted, but may be a known one. The cylinder of the double-screw extruder preferably has an inner diameter of 40 to 100 mm.

In the first polyethylene solution, the polyethylene resin is 10 to 50% by mass, preferably 20 to 45% by mass, per the total amount (100% by mass) of the polyethylene resin and the membrane-forming solvent. Less than 10% by mass of the polyethylene resin causes large swelling and neck-in at a die exit in the extrusion of the polyethylene solution, resulting in decrease in the formability and self-supportability of the gel molding. More than 50% by mass of the polyethylene resin deteriorates the formability of the gel molding.

(b) Preparation of second polyethylene solution

The second polyethylene solution is prepared by adding the above membrane-forming solvent to the polyethylene resin, the heat-resistant resin and the filler, and melt-blending them. The second polyethylene solution may be prepared by the same method as that of the first polyethylene solution, except that the melt-blending temperature is preferably equal to or higher than the melting point of the crystalline heat-resistant resin or the Tg of the amorphous heat-resistant resin, depending on the type of the heat-resistant resin, and that the amount of a solid component (polyethylene resin +heat-resistant resin + filler) in the polyethylene solution is preferably 1 to 50% by mass.

With the melt-blending temperature equal to or higher than the melting point of the crystalline heat-resistant resin or the Tg of the amorphous heat-resistant resin depending on the type of the heat-resistant resin, the heat-resistant resin is dispersed in the form of fine particles in the polyethylene resin. The melt-blending temperature is more preferably from the melting point of the crystalline heat-resistant resin or the Tg of the amorphous heat-resistant resin to the melting point of the polyethylene resin +120°C. For instance, when the heat-resistant resin is PBT (melting point: about 160 to 230°C) or polypropylene (melting point: 155 to 175°C), the melt-blending temperature is preferably 160 to 260°C, more preferably 180 to 250°C. When the heat-resistant resin is PMP (melting point: 230 to 245°C), the melt-blending temperature is preferably 230 to 260°C. The solid component content in the second polyethylene solution is more preferably 10 to 40% by mass.

(2) Formation of multi-layer, gel-like sheet

The melt-blended, first and second polyethylene solutions are simultaneously extruded from each extruder directly, or via another extruder, or pelletized by cooling and then extruded again through pluralities of extruder dies. Simultaneous extrusion may be conducted by a method of combining the first and second polyethylene solutions in a laminar form in one die, and extruding the laminated solutions in the form of a sheet, or a method of extruding each of the first and second polyethylene solutions in the form of a sheet through a die, and bonding them outside the die. Because of good productivity and adhesion of the first and second polyethylene solutions, the former method is preferable.

In the simultaneous extrusion, any of a flat die method and an inflation method may be used. To achieve bonding inside the die, a method of supplying the solutions to a manifold connected to a laminating die and laminating them at a die lip (manifold method), or a method of laminating the solutions and supplying the resultant laminate to a die (block method) may be used. Because the manifold method and the block method per se are known, their detailed explanation will be omitted. For instance, a known flat die or inflation die may be used to form a multi-layer membrane. The multi-layer-forming flat die preferably has a gap of 0.1 to 5 mm. When bonding is conducted outside the die by the flat die method, sheets extruded through the die may be laminated and then pressed between a pair of rolls, if necessary. In any methods described above, the die is heated at a temperature of 140 to 250°C during extrusion. The extruding speed of the heated solution is preferably 0.2 to 15 m/minute.

The gel molding thus extruded through a die lip is cooled to provide a multi-layer, gel-like sheet. The cooling is conducted preferably at a speed of 50°C/minute or more until the temperature becomes at least a gelation temperature. Such cooling fixes a micro-phase-separation structure in which the resin phases (polyethylene resin phase and heat-resistant resin phase) are separated by the membrane-forming solvent. The cooling is preferably conducted to 25°C or lower. In general, the slower the cooling speed, the larger the pseudo-cell units, resulting in a coarser higher-order structure of the multi-layer, gel-like sheet. On the other hand, the higher cooling speed results in denser cell units. The cooling speed less than 50°C/minute leads to increased crystallinity, making it unlikely to provide the multi-layer, gel-like sheet with suitable stretchability. Usable as the cooling method are a method of bringing the multi-layer, gel-like sheet into direct contact with a cooling medium such as cooling air, cooling water, etc., a method of bringing the multi-layer, gel-like sheet into contact with rolls cooled by a cooling medium, etc., and the cooling-roll-contacting method is preferable.

(3) Stretching

The multi-layer, gel-like sheet is stretched in at least one direction. Because the multi-layer, gel-like sheet contains the membrane-forming solvent, uniformly stretching can be conducted. After heated, the multi-layer, gel-like laminate sheet is stretched to a predetermined magnification after heated, by a tenter method, a roll method, an inflation method or a combination thereof. The stretching may be conducted monoaxially or biaxially, though the biaxial stretching is preferable. In the case of biaxial orientation, any of simultaneous biaxial stretching, sequential stretching and multi-stage stretching (for instance, a combination of the simultaneous biaxial stretching and the sequential stretching) may be used, though the simultaneous biaxial stretching is particularly preferable.

The stretching magnification is preferably 2 fold or more, more preferably 3 to 30 fold in the monoaxial stretching. In the biaxial stretching, the stretching magnification is preferably 3 fold or more in any direction, preferably 9 fold or more, more preferably 25 or more, in area magnification. Stretching at an area magnification of less than 9 fold is so insufficient that the multi-layer, microporous membrane is not provided with high modulus and strength. When the area magnification is more than 400 fold, stretching apparatuses, stretching operations, etc. are restricted.

The stretching temperature is preferably equal to or lower than Tm +10°C, wherein Tm is the melting point of the polyethylene composition included in the polyethylene resin in the first polyethylene solution, more preferably in a range of the crystal dispersion temperature or higher and lower than the melting point. When this stretching temperature exceeds the melting point of the polyethylene resin +10°C, the resin is melted, failing to orient molecular chains by stretching. When the stretching temperature is lower than the crystal dispersion temperature, the resin is so insufficiently softened that rupture is likely to occur in stretching, failing to achieve stretching at high magnification. The crystal dispersion temperature is determined by measuring the temperature properties of dynamic viscoelasticity according to ASTM D 4065. The ultra-high-molecular-weight polyethylene and the other polyethylene than that have crystal dispersion temperatures of about 90 to 100°C and melting points of about 130 to 140°C. Accordingly, the stretching temperature is usually in a range of 90 to 140°C, preferably in a range of 100 to 130°C.

Depending on the desired properties, stretching may be conducted with a temperature distribution in a thickness direction to provide the multi-layer, microporous membrane with higher mechanical strength. This method is described specifically in Japanese Patent 3347854.

The above stretching causes cleavage between polyethylene crystal lamellas, making the polyethylene resin phase phases finer and forming a large number of fibrils. The fibrils form a three-dimensional network structure (an irregularly, three-dimensionally combined network structure). In the layer containing the heat-resistant resin, fibrils are cleaved with fine, heat-resistant resin particles as cores, forming craze-like pores containing fine particles.

(4) Removal of membrane-forming solvent

The liquid solvent is removed (washed away) using a washing solvent. Because the resin phase (polyethylene composition phase and heat-resistant resin phase) is separated from the membrane-forming solvent phase, the multi-layer, microporous membrane is obtained by removing the membrane-forming solvent. The removal (washing away) of the liquid solvent may be conducted by using known washing solvents. The washing solvents may be volatile solvents, for instance, saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorohydrocarbons such as trifluoroethane, C₆F₁₄, C₇F₁₆, etc.; cyclic hydrofluorocarbons such as C₅H₃F₇, etc.; and hydrofluoroethers such as C₄F₉OCH₃, C₄F₉OC₂H₅, etc. These washing solvents have a low surface tension, for instance, 24 mN/m or less at 25°C. The use of a washing solvent having a low surface tension suppresses a pore-forming network structure from shrinking due to a surface tension of gas-liquid interfaces during drying after washing, thereby providing a multi-layer, microporous membrane having high porosity and air permeability.

The washing of the stretched multi-layer, gel-like sheet can be conducted by a washing-solvent-immersing method, a washing-solvent-showering method, or a combination thereof. The washing solvent used is preferably 300 to 30,000 parts by mass per 100 parts by mass of the stretched multi-layer membrane. Washing with the washing solvent is preferably conducted until the amount of the remaining liquid solvent becomes less than 1% by mass of that added.

(5) Drying of multi-layer membrane

The multi-layer, microporous polyethylene membrane obtained by stretching and the removal of the membrane-forming solvent is then dried by a heat-drying method, a wind-drying method, etc. The drying temperature is preferably equal to or lower than the crystal dispersion temperature of the polyethylene composition included in the polyethylene resin in the first microporous layer, particularly 5°C or more lower than the crystal dispersion temperature. Drying is conducted until the percentage of the remaining washing solvent becomes preferably 5% by mass or less, more preferably 3% by mass or less, based on 100% by mass of the dried multi-layer, microporous membrane. Insufficient drying undesirably reduces the porosity of the multi-layer, microporous membrane in a subsequent heat treatment, thereby resulting in poor air permeability.

(6) Heat treatment

The dried multi-layer membrane is preferably heat-treated. The heat treatment stabilizes crystals and makes lamellas uniform. The heat treatment comprises heat-setting and/or annealing. The heat setting is conducted at a temperature ranging from the crystal dispersion temperature of the polyethylene composition included in the polyethylene resin in the first microporous layer to the melting point of the polyethylene composition. The heat setting is conducted by a tenter method, a roll method or a rolling method.

In addition to the above method, the annealing may be conducted using a heating chamber with a belt conveyor or an air-floating-type heating chamber. The annealing is conducted at a temperature equal to or lower than the melting point of the polyethylene composition included in the polyethylene resin in the first microporous layer, preferably at a temperature ranging from 60°C to the melting point -10°C. Such annealing provides a high-strength multi-layer, microporous membrane having good air permeability. Heat-setting steps and annealing steps may be combined.

(7) Re-stretching

The dried multi-layer membrane is preferably stretched again in at least one direction. The re-stretching may be conducted by the same tenter method as described above, etc. while heating the membrane. The re-stretching may be monoaxial or biaxial stretching. The biaxial stretching may be simultaneous biaxial stretching or sequential stretching, though the simultaneous biaxial stretching is preferable.

The re-stretching temperature is preferably equal to or lower than the melting point of the polyethylene composition included in the polyethylene resin in the first microporous layer, more preferably in a range from the crystal dispersion temperature to the melting point. When the re-stretching temperature exceeds the melting point, the membrane has poor compression resistance, and large unevenness in properties (particularly air permeability) in a width direction when stretched in a transverse direction (TD). On the other hand, when the re-stretching temperature is lower than the crystal dispersion temperature, the resin is insufficiently softened, resulting in being highly likely broken in stretching and thus failing to achieve uniform stretching. Specifically, the stretching temperature is usually in a range of 90 to 135°C, preferably in a range of 95 to 130°C.

The magnification of re-stretching in one direction is preferably 1.1 to 2.5 fold to provide the multi-layer, microporous membrane with improved compression resistance. In the case of monoaxial stretching, for instance, it is 1.1 to 2.5 fold in a longitudinal direction (MD) or in a transverse direction (TD). In the case of biaxial stretching, it is 1.1 to 2.5 fold in MD and TD each. In the case of biaxial stretching, the stretching magnification may be the same or different in MD and TD as long as it is 1.1 to 2.5 fold in MD and TD each, though the same stretching magnification is preferable. When this magnification is less than 1.1 fold, the compression resistance is not sufficiently improved. On the other hand, when this magnification is more than 2.5 fold, the membrane is likely to rupture and have decreased dimensional stability. The re-stretching magnification is more preferably 1.1 fold to 2.0 fold.

(8) Cross-linking of membrane

The dried multi-layer, microporous membrane may be cross-linked by ionizing radiation of α-rays, β-rays, γ-rays, electron beams, etc. The cross-linking by ionizing radiation is preferably conducted with electron beams of 0.1 to 100 Mrad and at accelerating voltage of 100 to 300 kV. The cross-linking treatment elevates the meltdown temperature of the multi-layer, microporous polyethylene membrane.

(9) Hydrophilizing

The dried multi-layer, microporous membrane may be hydrophilized. The hydrophilizing treatment may be a monomer-grafting treatment, a surfactant treatment, a corona-discharging treatment, etc. The monomer-grafting treatment is preferably conducted after cross-linking.

The surfactant treatment may use any of nonionic surfactants, cationic surfactants, anionic surfactants and amphoteric surfactants, though the nonionic surfactants are preferable. The multi-layer, microporous membrane is dipped in a solution of the surfactant in water or a lower alcohol such as methanol, ethanol, isopropyl alcohol, etc., or coated with the solution by a doctor blade method.

(B) Second production method

The second production method differs from the first production method only in that after the stretched multi-layer, gel-like sheet is heat-set, the membrane-forming solvent is removed, the other steps being the same. The heat-setting may be the same as described above.

(C) Third production method

The third production method differs from the first production method only in that before and/or after the membrane-forming solvent is removed, the stretched multi-layer membrane is brought into contact with a hot solvent, the other steps being the same. Accordingly, explanation will be made only on the hot-solvent-treating step.

The hot solvent treatment is preferably conducted before removing the membrane-forming solvent. Solvents usable for the heat treatment are preferably the same as the above liquid membrane-forming solvents, more preferably liquid paraffin. The heat treatment solvents may be the same as or different from those used in the polyethylene solution.

The hot-solvent-treating method is not particularly restricted as long as the stretched multi-layer membrane comes into contact with a hot solvent. It includes, for instance, a method of directly contacting the stretched multi-layer membrane with a hot solvent (simply called "direct method" unless otherwise mentioned), a method of contacting the stretched multi-layer membrane with a cold solvent and then heating it (simply called, "indirect method" unless otherwise mentioned), etc. The direct method includes a method of immersing the stretched multi-layer membrane in a hot solvent, a method of spraying a hot solvent to the stretched multi-layer membrane, a method of coating the stretched multi-layer membrane with a hot solvent, etc., and the immersing method is preferable for uniform treatment. In the indirect method, the stretched multi-layer membrane is brought into contact with a hot roll, heated in an oven, or immersed in a hot solvent, after it is immersed in a cold solvent, sprayed with a cold solvent, or coated with a cold solvent.

With the treating temperature and time varied in the hot-solvent-treating step, the pore size and porosity of the multi-layer membrane can be changed. The temperature of the hot solvent is preferably from the crystal dispersion temperature of the polyethylene composition in the polyethylene resin in the first microporous layer to the melting point +10°C. Usually, the hot solvent temperature is preferably 110 to 140°C, more preferably 115 to 135°C. The contact time is preferably 0.1 seconds to 10 minutes, more preferably 1 second to 1 minute. When the hot solvent temperature is lower than the crystal dispersion temperature, or when the contact time is less than 0.1 second, the hot solvent treatment is substantially not effective, failing to improve air permeability. On the other hand, when the hot solvent temperature is higher than the melting point +10°C, or when the contact time is more than 10 minutes, the membrane loses strength or ruptures.

After the hot solvent treatment, the multi-layer membrane is washed to remove the remaining heat treatment solvent. Because the washing method per se may be the same as the above method of removing a membrane-forming solvent, explanation will be omitted. Needles to say, when the hot solvent treatment is conducted before removing the membrane-forming solvent, the above method of removing a membrane-forming solvent also removes the heat treatment solvent.

With such hot solvent treatment, fibrils formed by stretching have a leaf-vein-like structure, in which trunk-forming fibers are relatively thick. Accordingly, the multi-layer, microporous membrane having large pore diameters and excellent strength and permeability can be obtained. The term "leaf-vein-like fibrils" means that the fibrils have thick trunks and fine fibers spreading from the trunks, forming a complex network structure. The hot-solvent-treating step is not restricted in the third production method, but may be conducted in the second production method. Namely, the heat-set, stretched, multi-layer membrane may be brought into contact with a hot solvent, before and/or after removing the membrane-forming solvent in the second production method.

(D) Fourth production method

The fourth method for producing comprises the steps of (i) preparing the first and second polyethylene solutions in the same manner as described above, (ii) extruding the first and second polyethylene solutions separately through dies, and cooling each extrudate to form a gel-like sheet, (iii) stretching each gel-like sheet, (iv) removing a membrane-forming solvent from each stretched gel-like sheet, (v) drying it, and (vi) laminating the resultant first and second microporous polyethylene membranes alternately. After the steps (i)-(vi), a re-stretching step (vii), a heat treatment step (viii), a cross-linking step (ix) with ionizing radiations, a hydrophilizing step (x), etc., which are described above, may be conducted, if necessary. Also, after the step (iv), heat setting may be conducted. Before and/or after the step (iv), the above hot solvent treatment may be conducted.

The step (vi) of laminating the first and second microporous polyethylene membranes alternately will be explained below. The laminating method is not particularly restricted, but a heat-bonding method is preferable. The heat-bonding method includes a heat-sealing method, an impulse-sealing method, an ultrasonic-bonding method, etc., and the heat-sealing method is preferable. A hot roll method is particularly preferable, though not restrictive. In the hot roll method, a laminate of the first and second microporous polyethylene membranes is caused to pass through a pair of hot rolls, or between a hot roll and a table for heat-sealing. The heat-sealing temperature and pressure are particularly not restricted as long as the first and second microporous polyethylene membranes are fully bonded to provide a multi-layer, microporous membrane with good properties, but may be properly set. The heat-sealing temperature is usually 90 to 135°C, preferably 90 to 115°C. The control of the thickness of the first and second microporous polyethylene membranes adjusts the ratios of the first and second microporous layers.

[3] Properties of multi-layer, microporous polyethylene membrane

The multi-layer, microporous polyethylene membrane obtained by the above methods has the following properties.

(1) Air permeability of 20 to 400 seconds/100 cm³ (converted to value at 20-µm thickness)

With air permeability of 20 to 400 seconds/100 cm³, the multi-layer, microporous polyethylene membrane used as battery separators provides batteries with large capacity and good cyclability. The air permeability of less than 20 seconds/100 cm³ fails to perform enough shutdown when the temperature elevates in the batteries.

(2) Porosity of 25 to 80%

With the porosity of less than 25%, the multi-layer, microporous polyethylene membrane does not have good air permeability. When the porosity exceeds 80%, the multi-layer, microporous polyethylene membrane used as battery separators does not have enough strength, resulting in a high likelihood of short-circuiting between electrodes.

(3) Pin puncture strength of 3,000 mN/20 µm or more

With the pin puncture strength of less than 3,000 mN/20 µm, batteries comprising the microporous membrane as separators likely suffer short-circuiting between electrodes. The pin puncture strength is preferably 3,500 mN/20 µm or more.

(4) Tensile rupture strength of 80,000 kPa or more

With the tensile rupture strength of 80,000 kPa or more in both longitudinal direction (MD) and transverse direction (TD), there is no likelihood of rupture. The tensile rupture strength is preferably 100,000 kPa or more in both longitudinal direction (MD) and transverse direction (TD).

(5) Tensile rupture elongation of 100% or more

With the tensile rupture elongation of 100% or more in both longitudinal direction (MD) and transverse direction (TD), there is no likelihood of rupture.

(6) Heat shrinkage ratio of 10% or less

When the heat shrinkage ratio exceeds 10% in both longitudinal direction (MD) and transverse direction (TD) after exposed to 105°C for 8 hours, battery separators formed by the multi-layer, microporous polyethylene membrane shrink by heat generated by the batteries, resulting in high likelihood of short-circuiting in their end portions. The heat shrinkage ratio is preferably 8% or less in both MD and TD.

(7) Thickness variation ratio of 30% or more after heat compression

When the thickness variation ratio is 30% or more after heat compression at 90°C under pressure of 2.2 MPa (22 kgf/cm²) for 5 minutes, the multi-layer, microporous polyethylene membrane used as battery separators can well absorb the expansion of electrodes. This thickness variation ratio is preferably 40% or more.

(8) Air permeability of 700 seconds/100 cm³ or less after heat compression (converted to value at 20-µm thickness)

When the air permeability after heat compression at 90°C under pressure of 2.2 MPa (22 kgf/cm²) for 5 minutes (post-compression air permeability) is 700 seconds/100 cm³/20 µm or less, batteries having separators formed by the multi-layer, microporous polyethylene membrane have large capacity and good cyclability. The post-compression air permeability is preferably 600 sec/100 cm³/20 µm or less.

(9) Electrolytic solution absorption of 0.3 g/g or more

When the membrane is immersed in an electrolytic solution, the amount of the electrolytic solution absorbed by the membrane is 0.3 g/g or more at room temperature, wherein g/g represents a ratio of the amount (g) of the electrolytic solution absorbed to the mass (g) of the membrane before absorption. The electrolytic solution absorption is preferably 0.4 g/g or more.

[4] Battery separator

A battery separator formed by the above multi-layer, microporous polyethylene membrane has a thickness of preferably 5 to 50 µm, more preferably 10 to 35 µm, though variable depending on the type of a battery.

[5] Battery

A separator formed by the multi-layer, microporous polyethylene membrane of the present invention may be used in any batteries, and is particularly suitable for a lithium secondary battery. A lithium secondary battery comprising a separator formed by the multi-layer, microporous polyethylene membrane of the present invention may comprise known electrodes and electrolytic solution. The lithium secondary battery comprising a separator formed by the multi-layer, microporous polyethylene membrane of the present invention may have a known structure.

The present invention will be explained in more detail with reference to Examples below without intention of restricting the scope of the present invention.

Example 1

### Preparation of first polyethylene solution

Dry-blended were 100 parts by mass of a polyethylene composition comprising 20% by mass of ultra-high-molecular-weight polyethylene (UHMWPE) having a mass-average molecular weight (Mw) of 2.0 x 10⁶, and 80% by mass of high-density polyethylene (HDPE) having Mw of 3.5 x 10⁵, and 0.2 parts by mass of tetrakis[methylene-3-(3,5-ditertiary-butyl-4-hydroxyphenyl)-propionate] methane as an antioxidant. Measurement revealed that the polyethylene (PE) composition comprising UHMWPE and HDPE had a melting point of 135°C and a crystal dispersion temperature of 100°C.

The Mws of UHMWPE and HDPE were measured by a gel permeation chromatography (GPC) method under the following conditions.
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500 µl,
Detector: Differential Refractometer available from Waters Corp., and
Calibration curve: Produced from a calibration curve of a single-dispersion, standard polystyrene sample using a predetermined conversion constant.

30 parts by mass of the resultant mixture was charged into a strong-blending double-screw extruder having an inner diameter of 58 mm and L/D of 42, and 70 parts by mass of liquid paraffin [35 cst (40°C)] was supplied to the double-screw extruder via its side feeder. Melt-blending was conducted at 230°C and 250 rpm to prepare a first PE solution for surface layers.

Preparation of second polyethylene solution

Dry-blended were 100 parts by mass of a resin comprising 15% by mass of UHMWPE, 65% by mass of HDPE and 20% by mass of PBT (Mw: 3.5 x 10⁴), and 0.2 parts by mass of the above an antioxidant and 2.0 parts by mass of silica powder (volume-average particle size: 1 µm) to prepare a resin composition. 25 parts by mass of the resin composition was charged into another double-screw extruder of the same type as above, and 75 parts by mass of liquid paraffin [35 cst (40°C)] was supplied to the double-screw extruder via its side feeder, and melt-blended under the same conditions as above to prepare a second PE solution for an inner layer.

Film formation

The PE solution for surface layers and the PE solution for an inner layer were supplied to a three-layer-extruding T-die from each double-screw extruder, and extruded to form a laminate of the surface-layer PE solution, the inner-layer PE solution and the surface-layer PE solution at a mass ratio (surface-layer PE solution/inner-layer PE solution/surface-layer PE solution) of 27.25/45.5/27.25. The extrudate was drawn by cooling rolls controlled at 0°C and cooled to form a three-layer gel-like sheet. Using a tenter-stretching machine, the three-layer gel-like sheet was simultaneously and biaxially stretched at 115°C, such that the stretching magnification was 5 fold in both longitudinal direction (MD) and transverse direction (TD). Fixed to an aluminum frame of 20 cm x 20 cm, the stretched membrane was immersed in methylene chloride controlled at 25°C, and washed with the vibration of 100 rpm for 3 minutes. The membrane was dried with air at room temperature, and annealed at 125°C for 10 minutes using a tenter-stretching machine to form a multi-layer, microporous polyethylene membrane.

Example 2

A multi-layer, microporous polyethylene membrane was produced in the same manner as in Example 1, except that the annealed membrane was stretched again to 1.2 fold at 125°C in a transverse direction (TD).

Example 3

A multi-layer, microporous polyethylene membrane was produced in the same manner as in Example 2, except that the simultaneously biaxially stretched membrane was heat-set at 123°C for 10 minutes and then washed.

Example 4

A multi-layer, microporous polyethylene membrane was produced in the same manner as in Example 2, except that the simultaneously biaxially stretched membrane was fixed to an aluminum frame of 20 cm x 20 cm, immersed in a liquid paraffin bath controlled at 130°C for 3 seconds, and then washed.

Example 5

A multi-layer, microporous polyethylene membrane was produced in the same manner as in Example 2, except that calcium carbonate powder was used as the filler.

Example 6

A multi-layer, microporous polyethylene membrane was produced in the same manner as in Example 2, except that polymethylpentene (TPX, Mw: 5.2 x 10⁵) was used as the heat-resistant resin.

Example 7

A multi-layer, microporous polyethylene membrane was produced in the same manner as in Example 2, except that polypropylene (PP, Mw: 5.3 x 10⁵) was used as the heat-resistant resin.

Example 8

A multi-layer, microporous polyethylene membrane was produced in the same manner as in Example 2, except that the re-stretching direction was a longitudinal direction (MD).

Example 9

A multi-layer, microporous polyethylene membrane was produced in the same manner as in Example 2, except that the resin composition of the polyethylene solution inner layer comprised 15% by mass of UHMWPE, 75% by mass of HDPE and 10% by mass of PBT.

Example 10

A multi-layer, microporous polyethylene membrane was produced in the same manner as in Example 2, except that the resin composition of the polyethylene solution inner layer comprised 15% by mass of UHMWPE, 55% by mass of HDPE and 30% by mass of PBT.

Comparative Example 1

A PE solution having the same composition and concentration as those of the first PE solution in Example 1 was prepared. A single-layer, microporous polyethylene membrane was produced in the same manner as in Example 2, except that only the PE solution was extruded through the T die.

Comparative Example 2

A PE solution for surface layers was prepared in the same manner as in Example 1, except that 2.0 parts by mass of silica powder having a volume-average particle size of 1 µm was added to 100 parts by mass of the polyethylene composition. A PE solution for an inner layer was prepared in the same manner as in Example 1, except that silica powder was not added. A multi-layer, microporous polyethylene membrane was produced in the same manner as in Example 2, except that the resultant surface-layer PE solution and inner-layer PE solution were used.

Comparative Example 3

A PE solution having the same composition and concentration as those of the second PE solution of Example 1 was prepared. A single-layer, microporous polyethylene membrane was produced in the same manner as in Example 2, except that only the PE solution was extruded through the T-die.

Comparative Example 4

A multi-layer, microporous polyethylene membrane was produced in the same manner as in Example 2, except that the resin composition of the inner-layer polyethylene solution comprised 15% by mass of UHMWPE, 50% by mass of HDPE and 35% by mass of PBT.

Comparative Example 5

A multi-layer, microporous polyethylene membrane was produced in the same manner as in Example 2, except that the silica powder content in the inner-layer polyethylene solution was 7 parts by mass per the total amount (100 parts by mass) of the PE composition and PBT.

The properties of the microporous membranes obtained in Examples 1 to 10 and Comparative Examples 1 to 5 were measured by the following methods. The results are shown in Tables 1 and 2.

(1) average thickness (µm)

The thickness of the multi-layer, microporous membrane was measured at an arbitrary longitudinal position and at a 5-mm interval over a length of 30 cm in a transverse direction (TD) by a contact thickness meter, and the measured thickness was averaged.

(2) Air permeability (sec/100 cm³/20 µm)

The air permeabilityP₁ of the multi-layer, microporous membrane having a thickness T₁ was measured according to JIS P8117, and converted to air permeability P₂ at a thickness of 20 µm by the formula of P₂ = (P₁ x 20)/T₁.

(3) Porosity (%)

It was measured by a mass method.

(4) Pin puncture strength (mN/20 µm)

The maximum load was measured, when a multi-layer, microporous membrane having a thickness T₁ was pricked with a needle of 1 mm in diameter with a spherical end surface (radius R of curvature: 0.5 mm) at a speed of 2 mm/second. The measured maximum load L₁ was converted to the maximum load L₂ at a thickness of 20 µm by the formula of L₂ = (L₁ x 20) /T₁, which was regarded as pin puncture strength.

(5) tensile rupture strength and tensile rupture elongation

They were measured using a 10-mm-wide rectangular test piece according to ASTM D882.

(6) Heat shrinkage ratio (%)

The shrinkage ratio of the multi-layer, microporous membrane when exposed to 105°C for 8 hours was measured three times in both longitudinal direction (MD) and transverse direction (TD) and averaged.

(7) Shutdown temperature

Using a thermomechanical analyzer (TMA/SS6000 available from Seiko Instruments, Inc.), a microporous membrane sample of 10 mm (TD) x 3 mm (MD) was heated at a speed of 5°C/minute from room temperature while being longitudinally drawn under a load of 2 g. A temperature at an inflection point observed near the melting point was regarded as a shutdown temperature.

(8) Meltdown temperature (°C)

Using the above thermomechanical analyzer, a multi-layer, microporous membrane sample of 10 mm (TD) x 3 mm (MD) was while being longitudinally drawn under a load of 2 g, heated at a speed of 5°C/minute from room temperature, to measure a temperature at which the sample was ruptured by melting.

(10) Film formability

With a reel having a 500-m-long, wound, multi-layer, microporous membrane set in a slitter, an unwound membrane was cut to half along a running direction at a speed of 50 m/minute, and each of the resultant 500-m-long, slit sheets was caused to slide on a fixed bar and then wound around a reel. Powder attached to the fixed bar was recovered, and its mass was measured.

(11) Air permeability and thickness variation ratio after heat compression

A microporous membrane sample was sandwiched by a pair of press plates having high flatness and smoothness, and heat-compressed at 90°C under pressure of 2.2 MPa (22 kgf/cm²) for 5 minutes by a press machine. The air permeability (post-compression air permeability) and the average thickness were measured by the above methods. With the average thickness before the heat compression being 100%, the thickness variation ratio was calculated.

(12) Electrolytic-solution-absorbing speed

Using a dynamic-surface-tension-measuring apparatus (DCAT21 with high-precision electronic balance, available from Eko Instruments Co., ltd.), a microporous membrane sample was immersed in an electrolytic solution (electrolyte: 1 mol/L of LiPF₆, solvent: ethylene carbonate/dimethyl carbonate) kept at 18°C, to measure the mass increase of the membrane. The amount of the electrolytic solution absorbed per a sample mass was calculated by the formula of [mass increment (g) of membrane / mass (g) of membrane before absorption] as an index of an absorbing speed. The absorption speed (g/g) is expressed by a relative ratio, assuming that the absorption speed of the membrane of Comparative Example 1 is 1.

(13) Electrolytic solution absorption

A microporous membrane sample (width: 60 mm, length: 2 m) was wound 50 times to form a laminate roll (simple jelly roll-type) with no electrode, which was charged into a glass test tube (diameter: 18 mm, height: 65 mm). The above electrolytic solution was injected into the test tube by an injector (VD102i available from Fineflow Research Center Inc.), so that the sample was immersed in the electrolytic solution at room temperature for 1 minute. Thereafter, the laminate roll was taken out to measure its mass increase, to calculate the amount of the electrolytic solution absorbed per a sample mass [mass increment (g) of membrane / mass (g) of membrane before absorption].

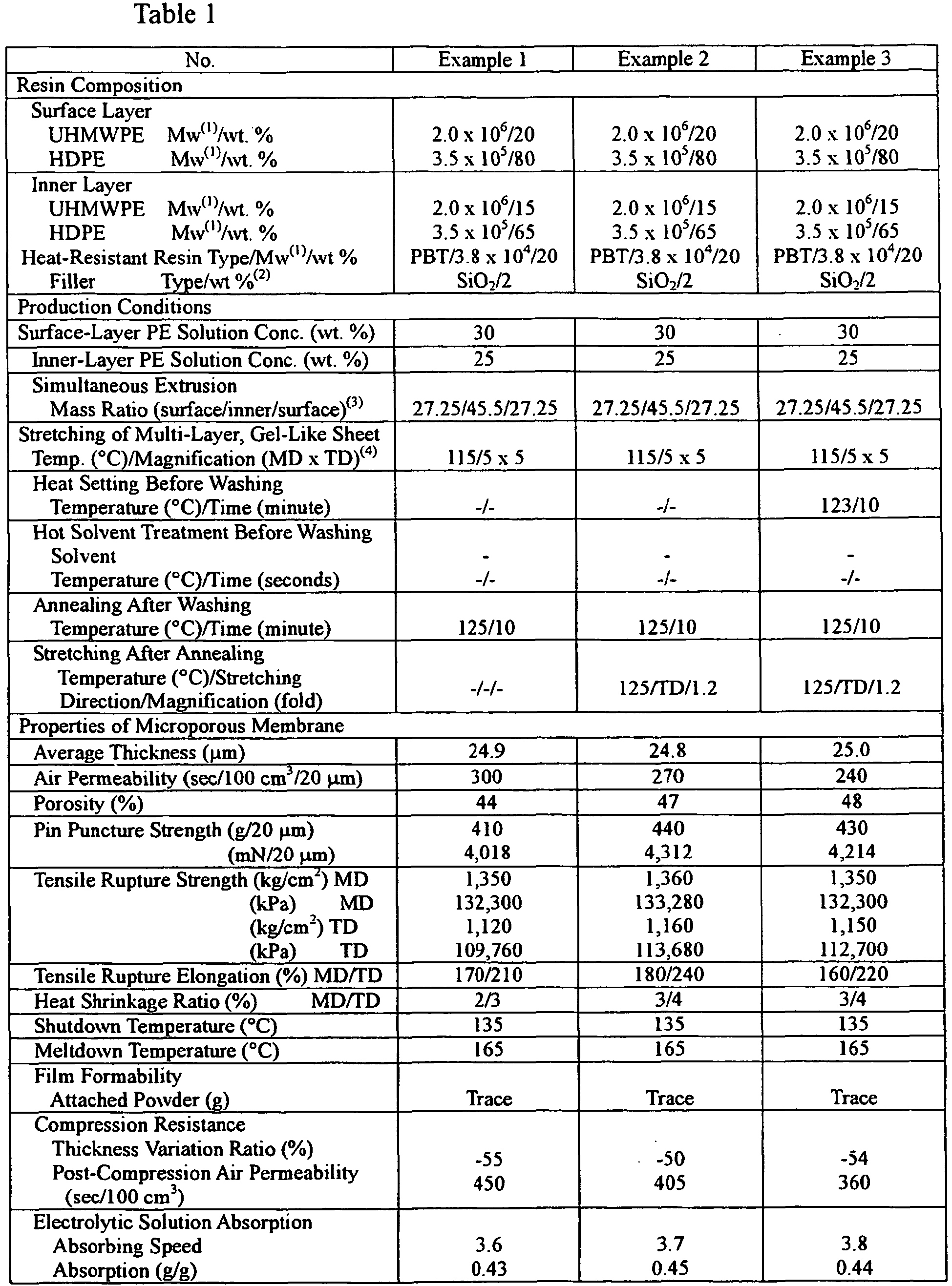

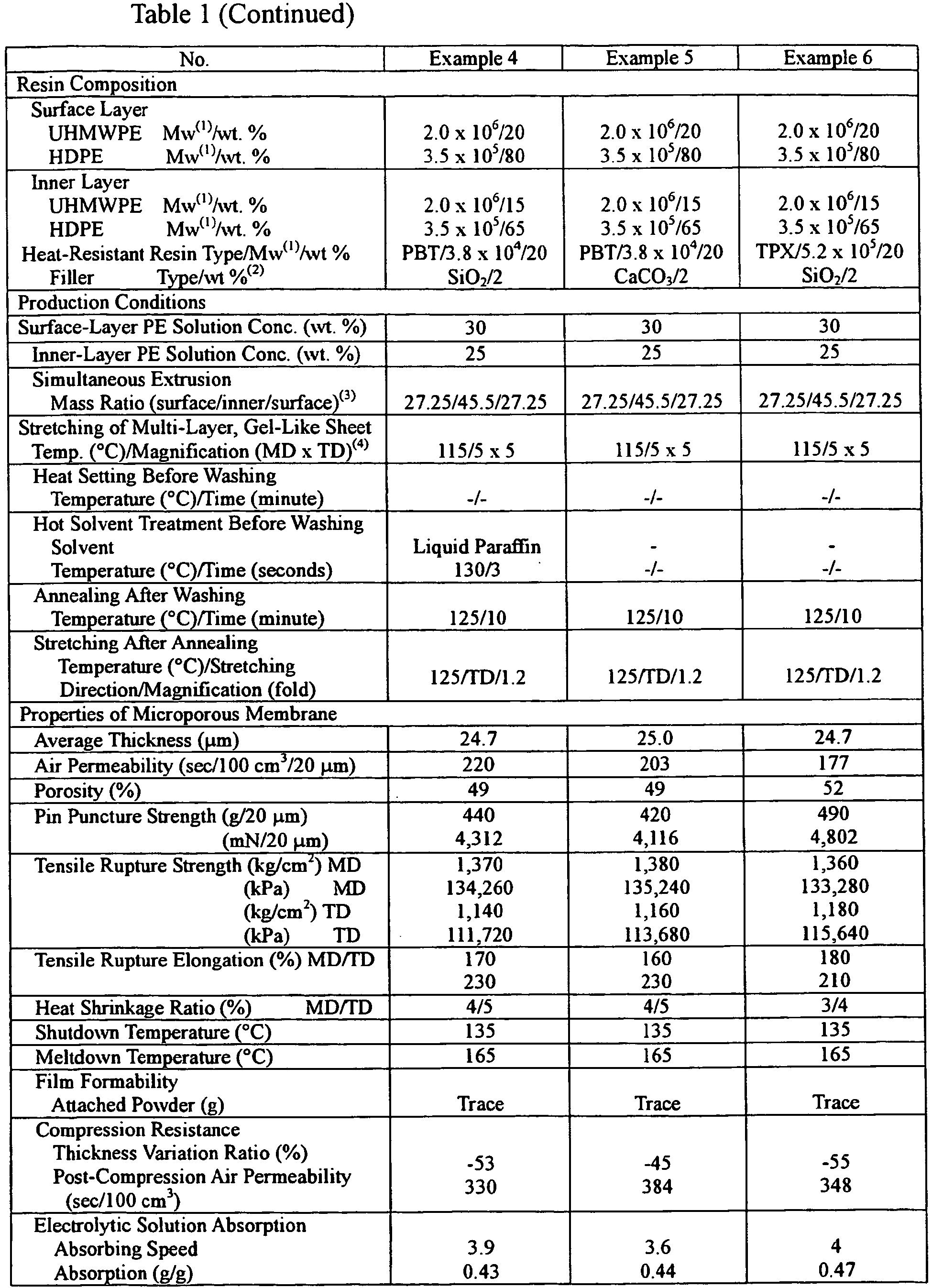

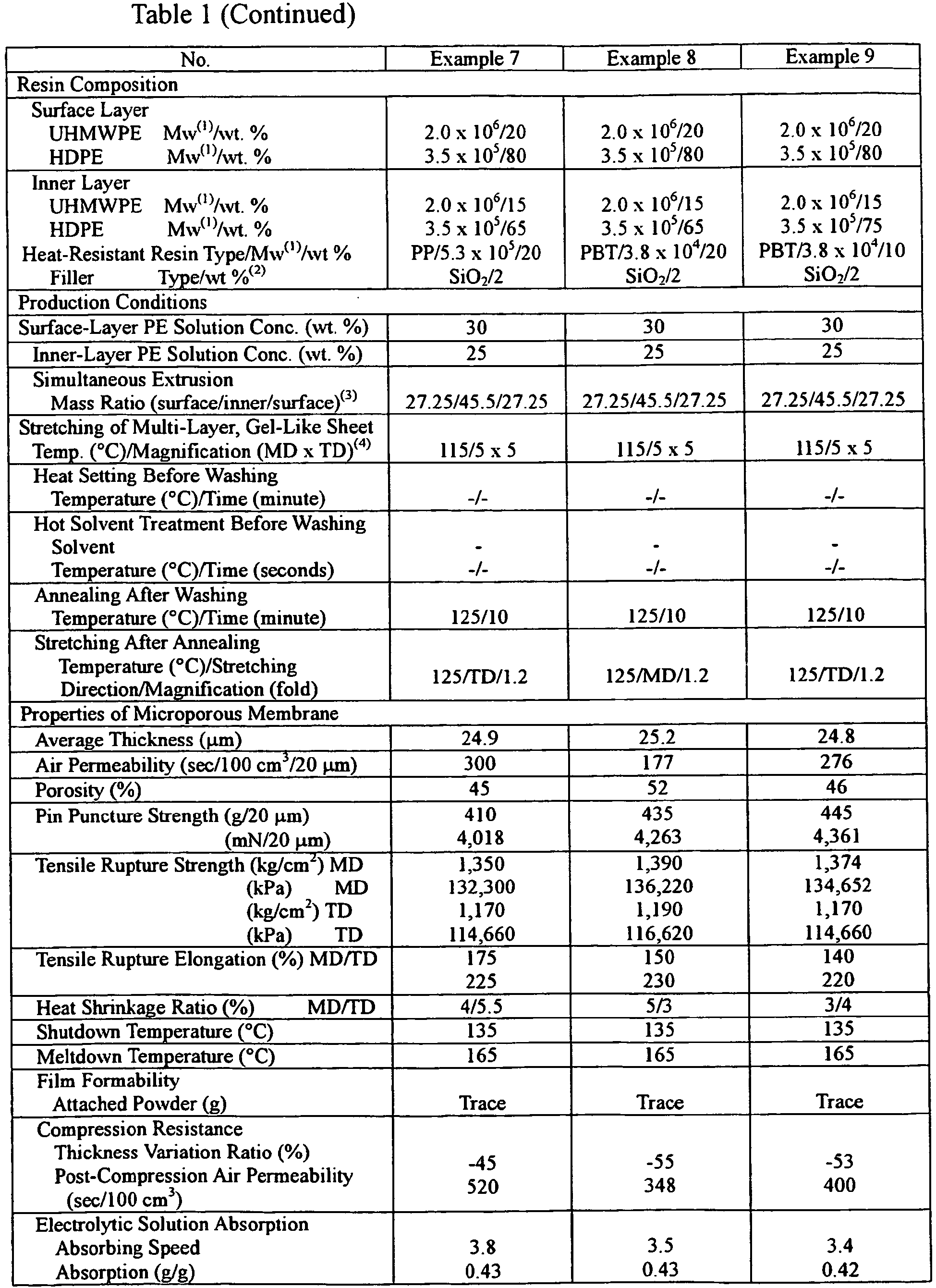

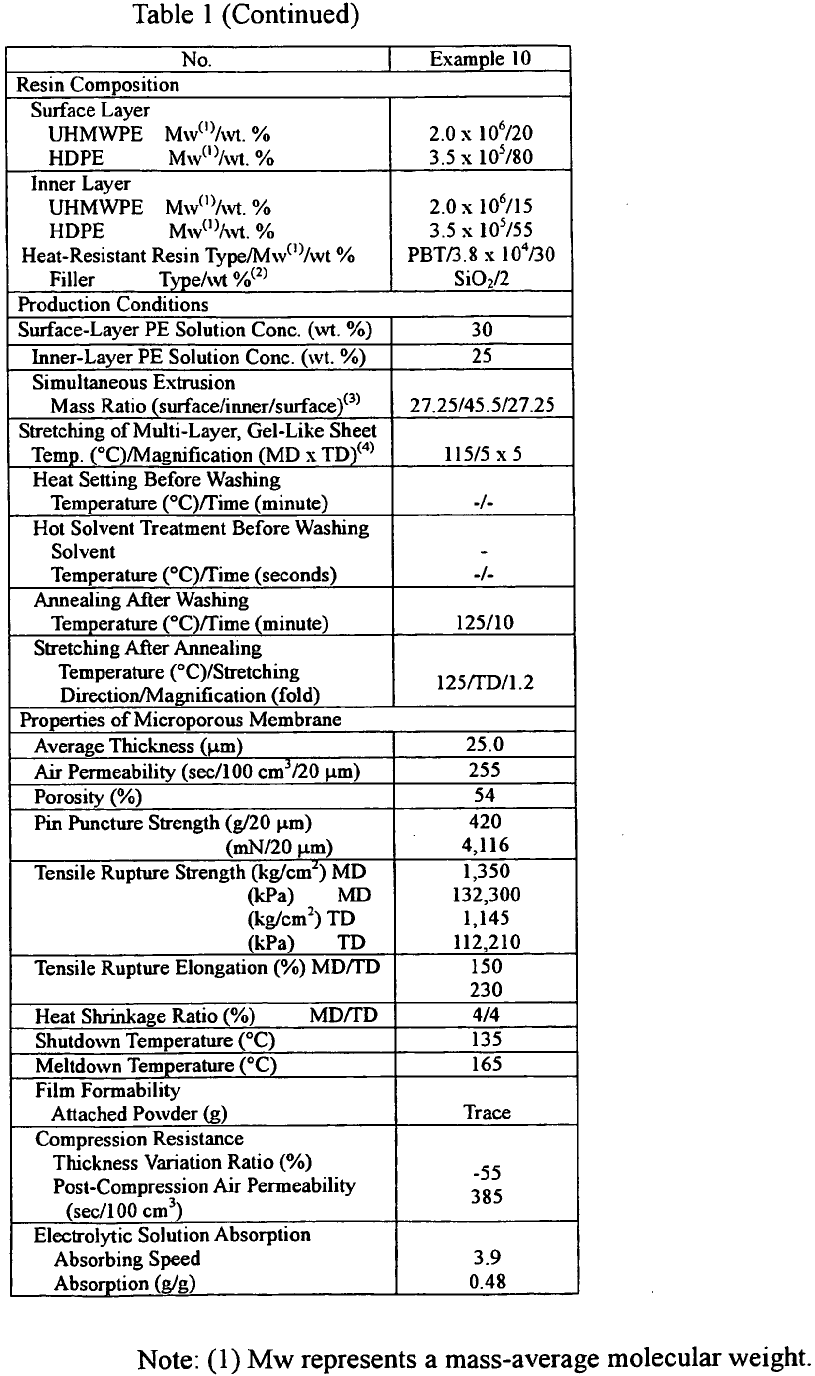

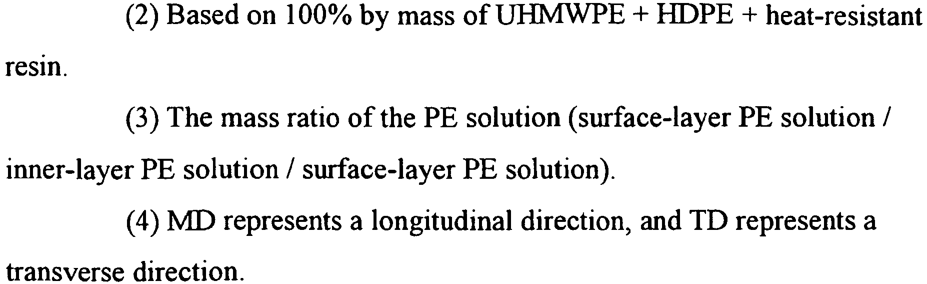

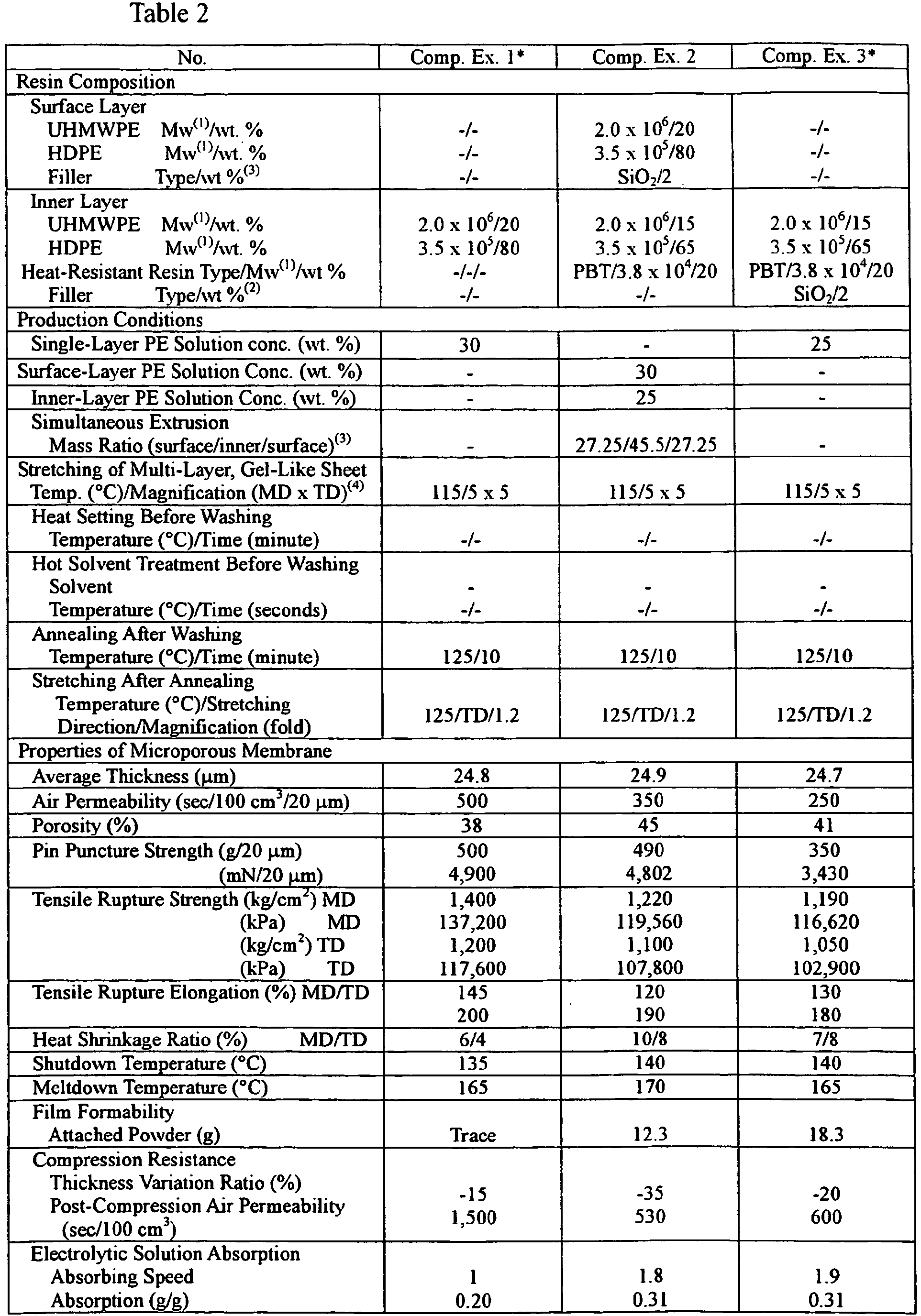

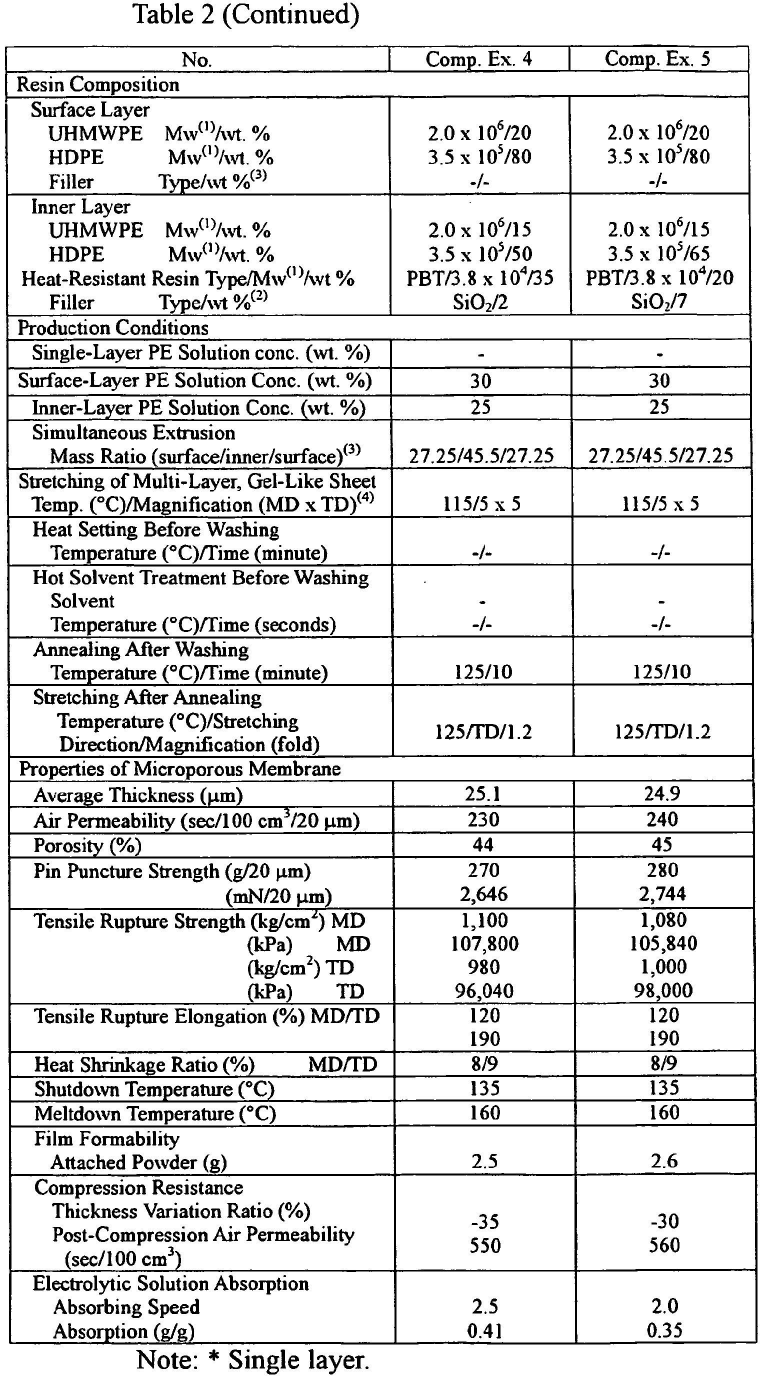

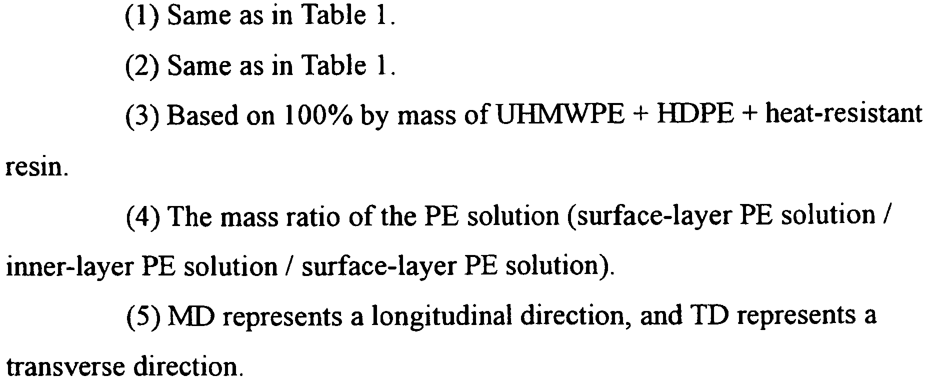

It is clear from Table 1 that Examples 1 to 10 exhibited an excellent balance of air permeability, mechanical properties, dimensional stability, shutdown properties and meltdown properties, as well as excellent compression resistance (compression deformability and post-compression air permeability) and electrolytic solution absorption (speed and amount of absorption) with extremely little detachment of the filler during slitting, because they had inner layers each constituted by the second microporous layer comprising the polyethylene composition, the heat-resistant resin and the inorganic filler, the first microporous layers on both surfaces of the inner layer being composed of the polyethylene composition.

On the other hand, the membrane of Comparative Example 1 was poorer than those of Examples 1 to 10 in post-compression air permeability and electrolytic solution absorption, because it was a single-layer membrane made of the PE composition. Accordingly, when the membrane of Comparative Example 1 is used as a battery separator, it is expected that a battery has insufficient capacity and cyclability, with high likelihood of premature decrease in capacity, for instance, in repeated charge and discharge. The membrane of Comparative Example 2 was poorer than those of Examples 1 to 10 in electrolytic solution absorption with the generation of a large amount of powder due to the detachment of the inorganic filler, because it contained the inorganic filler not in the inner layer but in the surface layer. The membrane of Comparative Example 3 was poorer than those of Examples 1 to 10 in thickness variation after heat compression and deformability with the generation of a large amount of powder due to the detachment of the inorganic filler, because it was a single-layer membrane comprising the PE composition, the heat-resistant resin and the filler. The membrane of Comparative Example 4 was poorer than those of Examples 1 to 10 in pin puncture strength and compression deformability, because it contained more than 30% by mass of PBT per 100% by mass of the total of the PE composition and the heat-resistant resin in the inner-layer polyethylene solution. The membrane of Comparative Example 5 was poorer than those of Examples 1 to 10 in pin puncture strength and compression deformability with the generation of a large amount of powder due to the detachment of the inorganic filler, because it contained more than 5 parts by mass of silica per 100 parts by mass of the total of the PE composition and the heat-resistant resin in the inner-layer polyethylene solution.

### EFFECT OF THE INVENTION

The multi-layer, microporous polyethylene membrane of the present invention has an excellent balance of air permeability, mechanical properties, dimensional stability, shutdown properties, meltdown properties, compression resistance and electrolytic solution absorption (expressed by absorbing speed and amount). With such multi-layer, microporous polyethylene membrane used as a separator, a battery excellent not only in capacity properties, cyclability, discharge properties, etc., but also in safety and productivity, such as heat resistance, compression resistance, etc. is obtained.

## Claims

1. A multi-layer, microporous polyethylene membrane having at least three layers, comprising (a) a first microporous layer made of a polyethylene resin and constituting at least both surface layers, and (b) at least one second microporous layer made of a polyethylene resin, a heat-resistant resin and a filler, and sandwiched by both surface layers,
wherein the polyethylene resin in the first and second microporous layers is a composition comprising ultra-high-molecular-weight polyethylene having a mass-average molecular weight of 5 x 10⁵ or more, and high-density polyethylene having Mw of 1 x 10⁴ or more and less than 5 x 10⁵,
wherein said heat-resistant resin is a crystalline resin having a melting point of 150 °C or higher, and/or an amorphous resin having a glass transition temperature of 150 °C or higher, the melting point and glass transition temperature being measured according to JIS K7121,
wherein said heat-resistant resin is at least one selected from the group consisting of polyesters, polymethylpentene and polypropylene,
wherein said heat-resistant resin is dispersed in the form of spherical or oval fine particles in the polyethylene resin, and
wherein said filler is silica and/or calcium carbonate.

2. The multi-layer, microporous polyethylene membrane according to claim 1, wherein said polyester is polybutylene terephthalate.

3. A multi-layer, microporous polyethylene membrane according to claim 1 or 2, wherein polyethylene fibrils are cleaved to provide pores each having a fine heat-resistant resin particle as a core.

4. A battery separator formed by the multi-layer, microporous polyethylene membrane recited in any one of claims 1 to 3.

5. A battery having a separator formed by the multi-layer, microporous polyethylene membrane recited in any one of claims 1 to 3.

## Patentansprüche

1. Mehrlagige mikroporöse Polyethylenmembran mit mindestens drei Lagen, aufweisend: (a) eine erste mikroporöse Lage, die aus Polyethylenharz hergestellt ist und mindestens die beiden Oberflächenlagen bildet, und (b) mindestens eine zweite mikroporöse Lage, die aus Polyethylenharz, einem wärmebeständigen Harz und einem Füllstoff hergestellt ist und zwischen den beiden Oberflächenlagen eingelegt ist,
wobei das Polyethylenharz in der ersten und der zweiten mikroporösen Lage eine Zusammensetzung darstellt, die Polyethylen mit ultrahohem Molekulargewicht mit einem massengemittelten Molekulargewicht von 5 x 10⁵ oder mehr sowie hochdichtes Polyethylen mit Mw von 1 x 10⁴ oder mehr und weniger als 5 x 10⁵ umfasst,
wobei das wärmebeständige Harz ein kristallines Harz mit einem Schmelzpunkt von 150 °C oder höher und/oder ein amorphes Harz mit einer Glasübergangstemperatur von 150 °C oder höher ist, wobei der Schmelzpunkt und die Glasübergangstemperatur nach JIS K7121 gemessen werden,
wobei das wärmebeständige Harz Polyester, Polymethylpenten und/oder Polypropylen ist,
wobei das wärmebeständige Harz in Form sphärischer oder ovaler feiner Teilchen im Polyethylenharz verteilt vorliegt, und
wobei der Füllstoff Silica und/oder Calciumcarbonat ist.

2. Mehrlagige mikroporöse Polyethylenmembran nach Anspruch 1, wobei der Polyester Polybutylenterephthalat ist.

3. Mehrlagige mikroporöse Polyethylenmembran nach Anspruch 1 oder 2, wobei Polyethylen-Fäserchen gespalten sind, um Poren zu bilden, die jeweils ein feines wärmebeständiges Harzteilchen als Kern aufweisen.

4. Batterieseparator, der von einer mehrlagigen mikroporösen Polyethylenmembran nach einem der Ansprüche 1 bis 3 gebildet ist.

5. Batterie mit einem Separator, der von einer mehrlagigen mikroporösen Polyethylenmembran nach einem der Ansprüche 1 bis 3 gebildet ist.

## Revendications

1. Membrane de polyéthylène microporeuse, multicouche ayant au moins trois couches, comportant (a) une première couche microporeuse composée d'une résine de polyéthylène et constituant au moins deux couches de surface, et (b) au moins une deuxième couche microporeuse composée d'une résine de polyéthylène, d'une résine résistant à la chaleur et d'une charge, et enserrée par les deux couches de surface,
dans laquelle la résine de polyéthylène dans les première et seconde couches microporeuses est une composition comprenant du polyéthylène d'un poids moléculaire très élevé ayant un poids moléculaire moyen en masse de 5 x 10⁵ ou plus, et du polyéthylène haute densité ayant un poids Mw de 1 x 10⁴ ou plus ou moins de 5 x 10⁵,
dans laquelle ladite résine résistant à la chaleur est une résine cristalline ayant un point de fusion de 150°C ou supérieur, et/ou une résine amorphe ayant une température de transition vitreuse de 150°C ou supérieure, le point de fusion et la température de transition vitreuse étant mesurés conformément à JIS K7121,
dans laquelle ladite résine résistant à la chaleur est au moins l'une choisie dans le groupe constitué par les polyesters, le polyméthylpentène et le polypropylène,
dans laquelle ladite résine résistant à la chaleur est dispersée sous la forme de fines particules sphériques ou ovales dans la résine de polyéthylène, et
dans laquelle ladite charge est de la silice et/ou du carbonate de calcium.

2. Membrane de polyéthylène microporeuse, multicouche selon la revendication 1, dans laquelle ledit polyester est du polybutylène téréphtalate.

3. Membrane de polyéthylène microporeuse, multicouche selon la revendication 1 ou 2, dans laquelle des fibrilles de polyéthylène sont clivées pour fournir des pores, chacun ayant une particule fine résistant à la chaleur en tant que noyau.

4. Séparateur de batterie formé par la membrane de polyéthylène microporeuse, multicouche selon l'une quelconque des revendications 1 à 3.

5. Batterie ayant un séparateur formé par la membrane de polyéthylène microporeuse, multicouche selon l'une quelconque des revendications 1 à 3.
